# EUROPÄISCHE PATENTANMELDUNG

(11) **EP 1 640 700 A1**
(43) Veröffentlichungstag der Anmeldung: **29.03.2006**
(21) Anmeldenummer: 04022775.3
(22) Anmeldetag: 24.09.2004
(51) Int. Cl.: G01M 11/06

(54) **Vorrichtung zur Einstellung von Scheinwerfern von Kraftfahrzeugen**

(71) Anmelder: VisiCon Automatisierungstechnik GmbH, 37130 Gleichen-Wöllmarshausen (DE)
(72) Erfinder: Brunk, Wolfgang, 37130 Gleichen-Wöllmarshausen (DE)
(74) Vertreter: Rehberg Hüppe + Partner

(57) **Zusammenfassung**

Eine Vorrichtung (1) zur Einstellung von Scheinwerfern (2) von Kraftfahrzeugen weist einen Lichtsammelkasten (4), der eine in den Lichtsammelkasten (4) einfallendes Licht (19) erfassende Kamera (20) umfasst, eine Führung (13/14), entlang der der Lichtsammelkasten (4) in definierter Winkelstellung vor einen Scheinwerfer (2) eines Kraftfahrzeugs verfahrbar ist, und eine elektrische Energieversorgung für den Lichtsammelkasten (4) auf. Die Energieversorgung weist ihrerseits eine mit dem Lichtsammelkasten (4) verfahren werdende Kondensatorbatterie (21) und eine ortsfeste Ladestation (26) für die Kondensatorbatterie (21) auf, wobei der Lichtsammelkasten (4) entlang der Führung (13/14) in eine Ladeposition verfahrbar ist, in der die Kondensatorbatterie (21) mit der Ladestation (26) verbunden ist.

## Beschreibung

Die Erfindung betrifft eine Vorrichtung zur Einstellung von Scheinwerfern von Kraftfahrzeugen mit den Merkmalen des Oberbegriffs des Patentanspruchs 1.

Eine Vorrichtung zur Einstellung von Scheinwerfern von Kraftfahrzeugen kann auch zur Kontrolle der Einstellung von Scheinwerfern beispielsweise in Kraftfahrzeugwerkstätten verwendet werden. Primär werden solche Vorrichtungen aber bei der Herstellung von Kraftfahrzeugen zu erstmaligen Einstellungen deren Scheinwerfer verwendet.

### STAND DER TECHNIK

Einer der letzten Schritte bei der Herstellung von Kraftfahrzeugen ist die Einstellung der Scheinwerfer. Hierzu ist die Verwendung einer Vorrichtung mit den Merkmalen des Oberbegriffs des Patentanspruchs 1 bekannt. Diese weist mit dem Lichtsammelkasten und der von diesem umfasste Kamera ein optisches Messsystem auf, das in vertikaler und horizontaler Richtung vor dem einzustellenden Scheinwerfer positioniert wird. Diese Positionierung kann je nach Vorrichtung manuell oder mit Hilfe von Verfahrantrieben erfolgen, die auf der Basis von Kenndaten des jeweiligen Kraftfahrzeugs von einem Rechner angesteuerten werden. Da die Winkelstellung des Lichtsammelkastens direkt in das Messergebnis zu der aktuellen Einstellung des jeweiligen Scheinwerfers eingeht, ist eine präzise Führung für den Lichtsammelkasten vorgesehen. Wenn das jeweilige Kraftfahrzeug den Bereich der Vorrichtung in Fahrtrichtung verlassen soll, muss der Lichtsammelkasten entlang der Führung aus einem Durchfahrweg für das Kraftfahrzeug heraus verfahrbar sein, und die Führung selbst muss über- oder unterfahrbar sein. Zu diesem Zweck kann die Führung an einem durchfahrbaren Portal vorgesehen sein. Die Einstellung des jeweiligen Scheinwerfers selbst erfolgt in der Regel halbautomatisch. Eine Bild des von dem Scheinwerfer abgestrahlten Lichts wird in dem Lichtsammelkasten mit der Kamera aufgenommen. Das Videosignal der Kamera wird von einer Bildverarbeitungseinheit ausgewertet, wobei die einzustellenden Merkmale des Scheinwerferbilds extrahiert, z.B. die Hell-/Dunkelgrenze, und deren Abweichungen von einer Sollposition ermittelt werden. Diese Abweichungen werden in der Regel zusammen mit einem Scheinwerferbild auf einem Monitor dargestellt, wobei eingeblendete Richtungspfeile die Richtung der an dem Scheinwerfer vorzunehmenden Korrekturen anzeigen. Darüber hinaus können die ermittelten Abweichungen von der Sollposition auch dazu dienen, ein Scheinwerfereinstellwerkzeug, üblicherweise einen Schrauber, anzusteuern, um die notwendige Korrektur der Einstellung des Scheinwerfers mit Hilfe eines elektrischen Werkzeugantriebs in einem geschlossenen Regelkreis vorzunehmen. Die Positionierung des Scheinwerfereinstellwerkzeugs auf der jeweiligen Einstellschraube an dem Scheinwerfer erfolgt in der Regel manuell. Es sind auch vollautomatische Anlagen bekannt, bei denen diese Positionierung von einem Roboter vorgenommen wird.

Die bekannte Vorrichtung mit den Merkmalen des Oberbegriffs des Patentanspruchs 1 weist für die Informations- und Energieübertragung zwischen dem Lichtsammelkasten und einem Schaltschrank, in dem ein die Bildverarbeitungseinheit umfassender Rechner angeordnet ist, Kabelverbindungen auf. Zusätzliche Kabelverbindungen sind für etwaige Verfahrantriebe des Lichtsammelkastens und ein mobiles Scheinwerfereinstellwerkzeug vorhanden. Diese Kabelverbindungen müssen sämtlich beweglich sein. Insbesondere für die Verbindung zum Lichtsammelkasten ist der Einsatz von mindestens zwei Kabelschlepps oder Energieketten für dessen horizontale und vertikale Bewegungsrichtung unumgänglich. Die Kabel selbst müssen hochflexibel sein. Die einschlägigen Betriebsmittelvorschriften der Kraftfahrzeughersteller schreiben außerdem vor, dass Kabelverbindungen an beiden Enden steckbar sein müssen, um einen schnellen Austausch zu ermöglichen. Die Anschlusskabel für das mobile Scheinwerfereinstellwerkzeug müssen nicht nur hochflexibel, sondern auch von variabler Länge sein, um unterschiedliche Positionen der Einstellschrauben von Scheinwerfern zu erreichen. Hier werden in der Regel Spiralkabel eingesetzt.

In allen industriellen Bereichen, einschl. und insbesondere im Bereich der Kraftfahrzeugindustrie, herrscht ein hoher Kostendruck. D.h. nicht nur die Komponenten von Kraftfahrzeugen, sondern auch die zu ihrer Herstellung eingesetzten Vorrichtungen sollen bei gleicher oder besser höherer Leistungsfähigkeit immer kostengünstiger werden.

### AUFGABE DER ERFINDUNG

Der Erfindung liegt die Aufgabe zugrunde, eine Vorrichtung zur Einstellung von Scheinwerfern von Kraftfahrzeugen mit den Merkmalen des Oberbegriffs des Patentanspruchs 1 aufzuzeigen, die ohne Beeinträchtigungen ihrer Leistungsfähigkeit grundsätzlich kostengünstiger herstellbar ist als die bekannten Vorrichtungen nach dem Stand der Technik.

### LÖSUNG

Die Aufgabe der Erfindung wird erfindungsgemäß durch eine Vorrichtung zur Einstellung von Scheinwerfern von Kraftfahrzeugen mit den Merkmalen des unabhängigen Patentanspruchs 1 gelöst.

Vorteilhafte Ausgestaltungen der neuen Vorrichtung sind in den Unteransprüchen 2 bis 10 beschrieben.

### WEITERER STAND DER TECHNIK

Als Kondensatorbatterien werden Kondensatoren mit sehr großer Kapazität bezeichnet, die zum Speichern von elektrischer Energie besonders geeignet sind. Solche Kondensatoren mit einer Kapazität im Bereich von 10 F bis 1000 F sind bekannt und kommerziell verfügbar. Vorteil dieser Kondensatorbatterien ist ihre Fähigkeit, nahezu beliebig oft entladen und wieder aufgeladen zu werden, ohne dass ihre Ladekapazität abfällt. Hersteller von Kondensatorbatterien geben eine Anzahl von mehr als 500.000 Wiederaufladezyklen an, wobei es keine Rolle spielt, ob eine teilweise oder vollständige Entladung der Kondensatorbatterien erfolgt. Zudem ist das Aufladen verglichen mit einem herkömmlichen Akkumulator in vergleichsweise kurzer Zeit möglich. Die Baugrößen von Kondensatorbatterien sind aufgrund der hohen Energiedichten vergleichsweise klein. Es sind Kondensatorbatterien, die auch als Ultrakondensatoren oder Ultracaps bezeichnet werden, von der Baugröße einer Monozelle mit 350 F bei 2,5 V bekannt. Dabei ist auch zu berücksichtigen, dass die Dichte von Kondensatormaterial deutlich geringer ist als diejenige von herkömmlichem Akkumulatormaterial.

Zur Regelung elektrischer Gleichstrommotoren sind getaktete Regler bekannt, die die von einer Spannungsquelle gelieferte Spannung in von einer Steuerung geregelten Takten an den elektrischen Antrieb durchschalten bzw. unterbrechen, um sowohl den Strom als auch die Spannung für den Betrieb des elektrischen Antriebs festzulegen. Dabei kann die Ausgangsspannung des getakteten Reglers beispielsweise durch eine Kapazität oder Induktivität geglättet werden. Vorteil ist die besonders geringe Verlustleistung eines derartigen Reglers, weil nur der für den Betrieb des elektrischen Antriebs benötigte Strom von der Spannungsquelle abgenommen wird.

Zur Ausbildung kabelloser Datenübertragungsstrecken sind etablierte Techniken unter den Bezeichnungen "Wireless USB" und "Bluetooth" bekannt und entsprechende Module zur Ausbildung der Datenübertragungsstrecken als elektrische Standardbauteile kommerziell verfügbar.

Kommerziell erhältliche Kleinrechner, die als PDA (Personal Digital Assistant) oder Pocket PC bezeichnet werden, verfügen über Prozessoren von ausreichender Leistungsfähigkeit und genügend Speicher, um anspruchsvollere Aufgaben der Mess-, Steuer- und Regelungstechnik ausführen zu können. Derartige Rechner verfügen zwar aufgrund ihrer minimalen Abmessung nicht wie ein klassischer PC über Einschübe (Slots) für zusätzliche Funktionen, sie weisen jedoch in der Regel mindestens eine serielle Schnittstelle (beispielsweise RS 232) sowie eine USB-Schnittstelle zur Synchronisation mit einem Host-PC auf. Es sind auch Kleinrechner kommerziell verfügbar, die über eine "Wireless LAN" und/oder eine Bluetooth-Schnittstelle verfügen.

### BESCHREIBUNG DER ERFINDUNG

Die vorliegende Erfindung macht in spezieller Weise von mehreren inzwischen handelsüblich verfügbaren Technologien Gebrauch, um eine Vorrichtung zur Einstellung von Scheinwerfern von Kraftfahrzeugen nicht nur kostengünstiger, sondern auch zuverlässiger und wartungsärmer auszubilden. Bewegliche Kabelverbindungen können dabei vollständig entfallen. Durch Kabelbrüche verursachte Fehler und Ausfallzeiten werden grundsätzlich vermieden. Der Platzbedarf der gesamten Vorrichtung sinkt, und Behinderungen durch bewegliche Kabelverbindungen treten nicht mehr auf. Allein die Einsparung der den Betriebsmittelvorschriften der Kraftfahrzeughersteller entsprechenden beweglichen Kabelverbindungen bedeutet eine erhebliche Kostenreduktion bei der Herstellung einer Vorrichtung zur Einstellung von Scheinwerfern von Kraftfahrzeugen in der Größenordnung von weit mehr als 10 % deren Gesamtkosten. Weitere wesentliche Einsparungen werden durch die Vermeidung aufwändiger Schaltschränke, einschl. einer unter Umständen notwendigen Klimatisierung, erreicht.

Die Energieversorgung für den Lichtsammelkasten der neuen Vorrichtung weist eine Kondensatorbatterie, die zusammen mit dem Lichtsammelkasten verfahren wird, und eine ortsfeste Ladestation für die Kondensatorbatterie auf. Dabei ist der Lichtsammelkasten entlang seiner Führung in eine Ladeposition verfahrbar, in der die Kondensatorbatterie mit der Ladestation verbunden ist. Bei der Verbindung der Kondensatorbatterie mit der Ladestation wird ein oder werden mehrere Kondensatoren der Kondensatorbatterie aufgeladen. Die dabei übertragene elektrische Energie steht nach dem Verfahren des Lichtsammelkastens aus seiner Ladeposition und dem damit verbundenen Trennen der Kondensatorbatterie von der Ladestation für alle Aufgaben zur Verfügung, die in oder an dem Lichtsammelkasten zu leisten sind.

Bei der neuen Vorrichtung kann der Kondensatorbatterie, die mit dem Lichtsammelkasten verfahren wird, ein getakteter Regler zugeordnet sein, um eine Energieversorgung mit fester Spannung bereitzustellen, obwohl die Ausgangsspannung der Kondensatorbatterie in Folge ihrer Entladung abfällt. Der getaktete Regler kann eine Kapazität oder Induktivität zur Glättung seiner Ausgangsspannung aufweisen. Der getaktete Regler hat den grundsätzlichen Vorteil, dass er die in der Kondensatorbatterie gespeicherte elektrische Energie bei der Spannungsregelung nicht zu erheblichen Teilen in Regelwiderständen in Wärme umwandelt, sondern der Kondensatorbatterie nur die elektrische Energie entnimmt, die von den mit Energie versorgten elektrischen Einrichtungen verbraucht wird.

Es hat sich jedoch herausgestellt, dass die von dem Lichtsammelkasten umfasste Kamera und andere in dem Lichtsammelkasten angeordnete Elektronik auch so ausgebildet werden kann, dass sie über einen großen Bereich von Eingangsspannungen funktionsfähig ist, so dass auf eine Regelung dieser Eingangsspannung mit einem zwischen die Kondensatorbatterie und die Kamera geschalteten Regler verzichtet werden kann.

Vorzugsweise befindet sich die Ladeposition des Lichtsammelkastens außerhalb eines Durchfahrweges für ein Kraftfahrtzeug durch die neue Vorrichtung, so dass die Kondensatorbatterien, die mit dem Lichtsammelkasten verfahren wird, dann in der Ladestation aufgeladen werden kann, wenn der Lichtsammelkasten aus dem Durchfahrweg für das Kraftfahrzeug heraus verfahren ist, um den Durchfahrweg für das Abfahren des Kraftfahrzeugs freizumachen.

Dabei kann die neue Vorrichtung auch zwei oder sogar mehr Lichtsammelkästen aufweisen, die entweder jeweils einer Spur des Kraftfahrzeugs zugeordnet und/oder wechselseitig als Ersatz vorgesehen sind.

Bei der neuen Vorrichtung ist es besonders bevorzugt, wenn der Lichtsammelkasten neben der Kamera auch eine Bildverarbeitungseinheit für ein Videosignal der Kamera umfasst. Diese Bildverarbeitungseinheit kann dabei in die Kamera integriert sein. Hiermit wird es erleichtert, zwischen dem Lichtsammelkasten und einer mobilen oder ortsfesten Einheit der Vorrichtung eine drahtlose Datenübertragungsstrecke auszubilden. Das Videosignal einer Kamera benötigt eine hohe Übertragungskapazität einer solchen Datenübertragungsstrecke. Ein schwarz/weißes Videosignal im VGA-Standard mit 640 x 480 Bildpunkten 30 Mal pro Sekunde entspricht einer Datenübertragungsrate von 73,73 MBit pro Sekunde. Das kennzeichnende Merkmal eines europäischen Scheinwerfers, die Hell-Dunkelgrenze besteht bei einem Videosignal im VGA-Standard hingegen nur aus maximal 640 Bildpunkten. Verlegt man die Bildverarbeitung des Videosignals zur Bestimmung der Hell-Dunkelgrenze in den Lichtsammelkasten, reduziert sich die notwendige Übertragungskapazität der Datenübertragungsstrecke bei 30 Bildern pro Sekunde bereits auf 172,8 kBit pro Sekunde. Verlegt man zusätzlich die Bestimmung des Knickpunkts der Hell-Dunkelgrenze in eine Bildverarbeitungseinheit in dem Lichtsammelkasten, reduziert sich die notwendige Übertragungskapazität der Datenübertragungsstrecke bei 30 Bildern pro Sekunde auf 960 Bit pro Sekunde. Sowohl Wireless USB- als auch serielle Bluetooth-Module verfügen mit ca. 250 kBit bzw. ca. 750 kBit über eine hierfür mehr als ausreichende Übertragungsbandbreite. D.h., eine drahtlose Datenübertragungsstrecke zwischen dem Lichtsammelkasten und einer mobilen oder ortsfesten Einheit der Vorrichtung kann mit kommerziell verfügbaren Standardkomponenten ausgebildet werden.

Vorzugsweise handelt es sich bei der mobilen oder ortsfesten Einheit der Vorrichtung, die über die drahtlose Datenübertragungsstrecke mit dem Lichtsammelkasten kommuniziert, um einen Rechner, der von dem Lichtsammelkasten empfangene Bilddaten und dem Kraftfahrzeug zugeordnete Kenndaten verarbeitet, um Abweichungen der aktuellen Einstellung des jeweiligen Scheinwerfers von seiner Solleinstellung zu bestimmen. Die dem Fahrzeug zugeordneten Kenndaten kann der Rechner ebenfall drahtlos einlesen, beispielsweise über eine Wireless LAN-Schnittstelle aus einem Datennetzwerk des Fahrzeugstellers. Dabei kann der Rechner der neuen Vorrichtung ein PDA oder Pocket PC sein. In Kombination mit einer Bildverarbeitungseinheit in dem Lichtsammelkasten, die z.B. bereits das Scheinwerferbild auf die Hell-Dunkelgrenze reduziert, lässt sich die notwendige Information für den Rechner auch seriell übertragen, wodurch der Nachteil des fehlenden Framegrabbers/Digitizers bei einem PDA bzw. Pocket PC ausgeglichen wird. Aus der Hell-Dunkelgrenze kann der Rechner alle notwendigen Informationen für die Scheinwerfereinstellung generieren. Auch das bisher übliche Scheinwerferbild mit eingeblendeten Richtungspfeilen kann auf dem integrierten Display eines PDA bzw. Pocket PC dargestellt werden.

Vorzugsweise weist die neue Vorrichtung ein mobiles Scheinwerfereinstellwerkzeug mit einem elektrischen Werkzeugantrieb, mit einem drahtlos angesteuerten getakteten Regler und mit einer Kondensatorbatterie sowie eine Ladestation für die Kondensatorbatterie auf, wobei der getaktete Regler die Energiezufuhr von der Kondensatorbatterie zu dem Werkzeugantrieb regelt. Die drahtlose Ansteuerung des getakteten Reglers, der Strom und Spannung für den elektrischen Werkzeugantrieb regelt, kann direkt aus dem Lichtsammelkasten heraus oder über einen separat hierzu vorgesehenen Rechner erfolgen. Der Regler selbst kann in an sich bekannter Weise durch einen digitalen Signalprozessor (DSP) realisiert werden. Ein solcher DSP verfügt unter anderem über eine serielle Schnittstelle, um die gewünschte Drehzahl sowie die Richtung und das Drehmoment des elektrischen Werkzeugantriebs an den Regler zu übertragen. Durch Kopplung dieser seriellen Schnittstelle an ein Wireless USB- oder serielles Bluetooth-Modul ist die kabellose Ansteuerung möglich. Aufgrund der hohen Leistungsdichte bekannter Kondensatorbatterien und des geringen Energieverbrauchs des über den getakteten Reglers angesteuerten elektrischen Werkzeugantrieb ist es problemlos möglich, das mobile Scheinwerfereinstellwerkzeuge der neuen Vorrichtung als Handgerät auszubilden. Konkret ist ein einziger Ultrakondensator in der Baugröße einer Monozelle, der in der Ladestation auf beispielsweise 48 V aufgeladen wird, bis zu seiner Entladung auf 12 V in der Lage, eine Energie von nahezu 500 Joule zur Verfügung zu stellen, was für den Einstellvorgang der Scheinwerfer eines Kraftfahrzeugs als völlig auszureichend anzusehen ist. Ein herkömmlicher Akkumulator wäre nicht nur schwerer als die Kondensätorbatterie für das Scheinwerfereinstellwerkzeug; er käme auch aufgrund seiner schlechten Eigenschaften beim häufigen Wiederaufladen für eine Verwendung bei der neuen Vorrichtung grundsätzlich nicht in Frage.

Die Ladestation für die Kondensatorbatterie des Scheinwerfereinstellwerkzeugs kann an der mobilen oder ortsfesten Einheit mit dem Rechner vorgesehen sein, wobei der Rechner den Regler des Scheinwerfereinstellwerkzeugs ansteuert. Die neue Vorrichtung weist dann neben dem Lichtsammelkasten und seiner Führung sowie der daran ausgebildeten Ladestation nur die ortsfesten Einheiten mit dem Rechner und der Ladestation für das Scheinwerfereinstellwerkzeug auf. Dabei können auch zwei Ladestationen mit jeweils einem Scheinwerfereinstellwerkzeug vorgesehen sein, um diese beiden Scheinwerfereinstellwerkzeuge wechselseitig zu verwenden, wobei das jeweils andere Scheinwerfereinstellwerkzeug unterdessen aufgeladen wird.

Bei besonders bevorzugten Ausführungsformen der neuen Vorrichtung ist der Lichtsammelkasten mit einer Antriebseinrichtung verfahrbar, die mindestens einen seinerseits verfahrbaren elektrischen Verfahrantrieb und eine Energieversorgung für den Verfahrantrieb aufweist, wobei der Energieversorgung eine Kondensatorbatterie und einen getakteten Regler, die mit dem Verfahrantrieb verfahren werden, sowie eine ortsfeste Ladestation für die Kondensatorbatterie aufweist. Die Kondensatorbatterie ist vorzugsweise dann mit der Ladestation verbunden, wenn sich der Lichtsammelkasten in seiner Ladeposition befindet. Überraschenderweise stellt sich heraus, dass statt aufwändiger, bislang für Lichtsammelkästen verwendeter gleichstrombetriebener Servomotoren mit zugehörigen Servoverstärkern und digitalen Gebern für die Positionsrückmeldung eine völlig ausreichende Positioniergenauigkeit für den Lichtsammelkasten auch mit Antriebseinrichtungen erreichbar ist, die prinzipiell dieselben getakteten Regler in Form von digitalen Signalprozessoren aufweisen, wie die Scheinwerfereinstellwerkzeuge mit elektrischem Werkzeugantrieb. Die Positionsregelung kann dabei über eine Schnittstelle des digitalen Signalprozessors für einen inkrementalen Drehgeber an dem elektrischen Verfahrantrieb erfolgen. Die Ansteuerung des getakteten Reglers kann über einen mit dem Verfahrantrieb verfahrenen Rechner oder auch drahtlos von einem separaten Rechner aus erfolgen. Für die drahtlose Ansteuerung können wieder kommerziell verfügbare Wireless USB- oder serielle Bluetooth-Module eingesetzt werden. Die Energieversorgung der gesamten Antriebseinrichtung für den Lichtsammelkasten über Kondensatorbatterien ist problemlos. Für die Einstellung beider Hauptscheinwerfer eines Kraftfahrzeugs und das dafür erforderliche Verfahren des Lichtsammelkastens kann der Energiebedarf auf ca. 9.000 Joule (300 Watt für 30 Sekunden) abgeschätzt werden. Wenn 20 kommerziell erhältliche Ultrakondensatoren von der Baugröße einer Monozelle mit jeweils 350 F in Reihe geschaltet und auf 48 V aufgeladen werden, ergibt dies bei einer Entladung auf 12 V eine Gesamtenergie von 18.900 Joule, d.h. es ist bereits mehr als eine 100 % Reserve für den Betriebe der Antriebseinrichtung vorhanden. Da der Lichtsammelkasten nach jeder Einstellung der Scheinwerfer eines Kraftfahrzeugs typischerweise aus dem Durchfahrweg der Vorrichtung heraus verfahren werden muss, bietet es sich an, die Kondensatoren während dieser Zeit wieder aufzuladen, wofür lediglich ein ausreichend groß dimensioniertes Netzgerät an der Ladestation vorhanden sein muss.

### KURZBESCHREIBUNG DER FIGUREN

Im Folgenden wird die Erfindung anhand eines in den Figuren dargestellten bevorzugten Ausführungsbeispiels weiter erläutert und beschrieben.
- Fig. 1: zeigt eine perspektivische Darstellung der neuen Vorrichtung für die Einstellung von Scheinwerfern und von Kraftfahrzeugen; und
- Fig. 2: zeigt ein Blockdiagramm der Einzelbestandteile der Vorrichtung 1 gemäß Fig. 1.

### FIGURENBESCHREIBUNG

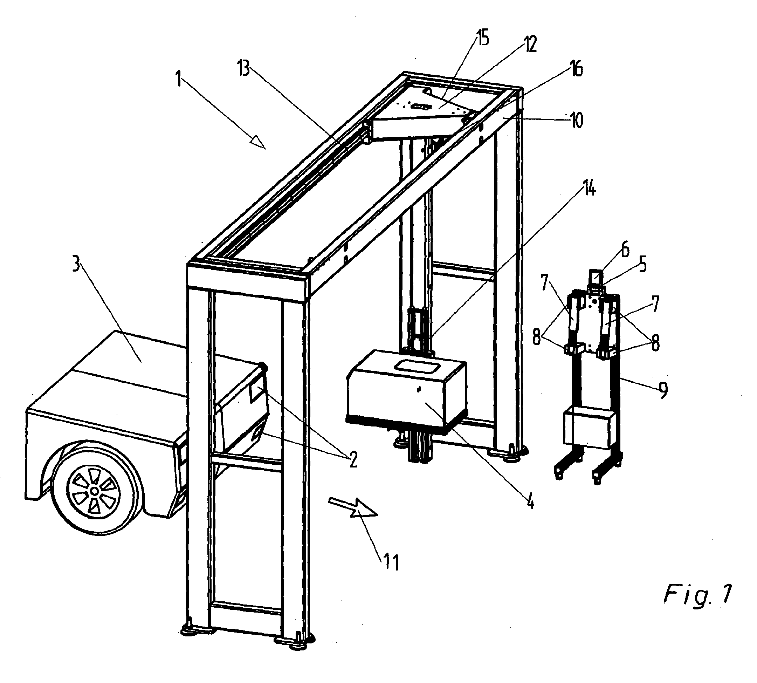

Die in Fig. 1 dargestellte Vorrichtung 1 dient zur Einstellung Scheinwerfern 2 von Kraftfahrzeugen 3. Die Vorrichtung 1 weist hierzu ein optisches Messsystem in Form eines Lichtsammelkastens 4 auf, der zum Einstellen eines Scheinwerfers 2 vor diesem positioniert wird und das von dem Scheinwerfer 2 abgestrahlte Licht auffängt. In dem Lichtsammelkasten 4 ist eine Kamera vorgesehen, die das einfallende Licht erfasst. Ein unmittelbar von der Kamera abgegebenes Videosignal wird von einer Bildverarbeitungseinheit in dem Lichtsammelkasten 4 soweit verarbeitet, dass eine Hell-Dunkelgrenze des Scheinwerfers 2, deren Lage für die Einstellung des Scheinwerfers 2 verwendet wird, bestimmt und anschließend drahtlos an einen Rechner 5 übermittelt werden kann. Die hierfür verwendete Datenübertragungsstrecke kann eine Wireless USB- oder Bluetooth-Datenübertragungsstrecke sein, wobei der Rechner 5 eine sogenannter Personal Digital Assistant (PDA) oder Pocket PC sein kann. Der Rechner vergleicht die ihm übermittelte Hell-Dunkelgrenze mit Kenndaten des jeweiligen Kraftfahrzeugs 3, um Abweichungen der Ist-Lage der Hell-Dunkelgrenze von ihrer Soll-Lage zu bestimmen und auf einem Display 6 anzuzeigen. Aufgrund der Anzeige auf dem Display 6 kann die Korrektur der Einstellung der Scheinwerfer 2 mit einem geeigneten Werkzeug manuell vorgenommen werden. Bevorzugt ist für die Korrektur der Einstellung des jeweiligen Scheinwerfers 2 jedoch die Verwendung von mobilen Scheinwerfereinstellwerkzeugen 7, für die Ladestation 8 an derselben Einheit 9 vorgesehen sind, die den Rechner 5 und beispielsweise auch eine Ladestation für den als Rechner 5 verwendeten PDA umfasst. Die mobilen Scheinwerfereinstellwerkzeuge 7 umfassen jeweils neben einem elektrischen Werkzeugantrieb einen drahtlos angesteuerten getakteten Regler und eine Kondensatorbatterie. Der Regler wird beispielsweise über eine Wireless USB- oder Bluetooth-Datenübertragungsstrecke von dem Rechner 5 angesteuert, um die Einstellung eines Scheinwerfers 2 in einem geschlossenen Regelkreis vorzunehmen. Die für das Scheinwerfereinstellwerkzeug 7 benötigte Antriebsenergie wird der jeweiligen Kondensatorbatterie entnommen, die anschließend in ihrer Ladestation 8 an der Einheit 9 wieder aufgeladen wird. Dabei können die beiden hier vorgesehenen mobilen Scheinwerfereinstellwerkzeuge 7 wechselweise verwendet und wieder aufgeladen werden. Es kann auch eine größere Anzahl von Scheinwerfereinstellwerkzeugen 7 für den gleichzeitigen und/oder wechselweisen Einsatz vorgesehen sein. Die elektrische Versorgung des Lichtsammelkastens 4 erfolgt ebenfalls durch eine Kondensatorbatterie. Diese wird mit einer hier nicht dargestellten Ladestation verbunden, wenn der Lichtsammelkasten 4 entlang einer hier an einem Portal 10 ausgebildeten Führung 13/14, die zur Einhaltung seiner korrekten Winkelstellung vorgesehen ist und die eine Horizontalführung 13 und eine Vertikalführung 14 aufweist, in eine Ladeposition verfahren wird, in der er sich außerhalb eines Durchfahrwegs 11 für das Kraftfahrzeug 3 durch das Portal 10 befindet. Wenn der Lichtsammelkasten 4 seine Ladeposition erreicht, wird auch eine Kondensatorbatterie aufgeladen, die zu einer Verfahreinrichtung 12 der Vorrichtung 1 zum Verfahren des Lichtsammelkastens 4 entlang der Führung 13/14 gehört. Die Verfahreinrichtung 12 umfasst neben der Kondensatorbatterie elektrische Verfahrantriebe 15 und 16, um den Lichtsammelkasten 4 entlang der Horizontalführung 13 bzw. der Vertikalführung 14 zu verfahren, und zwischen diese und die Kondensatorbatterie geschaltete, drahtlos angesteuerte getaktete Regler. Auch die Ansteuerung dieser getakteten Regler erfolgt durch den Rechner 6 und zwar in Abhängigkeit von den Fahrzeugkenndaten, die der Rechner 6 über ein drahtloses Netzwerk, wie beispielsweise ein Wireless LAN geladen haben kann. Die Regelung der Position des Lichtsammelkastens 4 kann dabei über eine Rückkopplung durch inkrementale Drehgeber an den Verfahrantrieben 15, 16 erfolgen, deren Signal an den Regler zurückgeführt wird. Sowohl die getakteten Regler der Antriebseinheit 12 als auch der mobilen Scheinwerfereinstellwerkzeuge 7 sind als digitale Signalprozessoren (DSB) ausgebildet und können eine Kapazität oder Induktivität zur Glättung ihrer Ausgangsspannung aufweisen. Die Vorrichtung 1 weist keinerlei Energie- oder Datenübertragungskabel zwischen Teilen der Vorrichtung 1 auf, die während ihres Betriebs notwendiger Weise relativ zueinander verfahren werden.

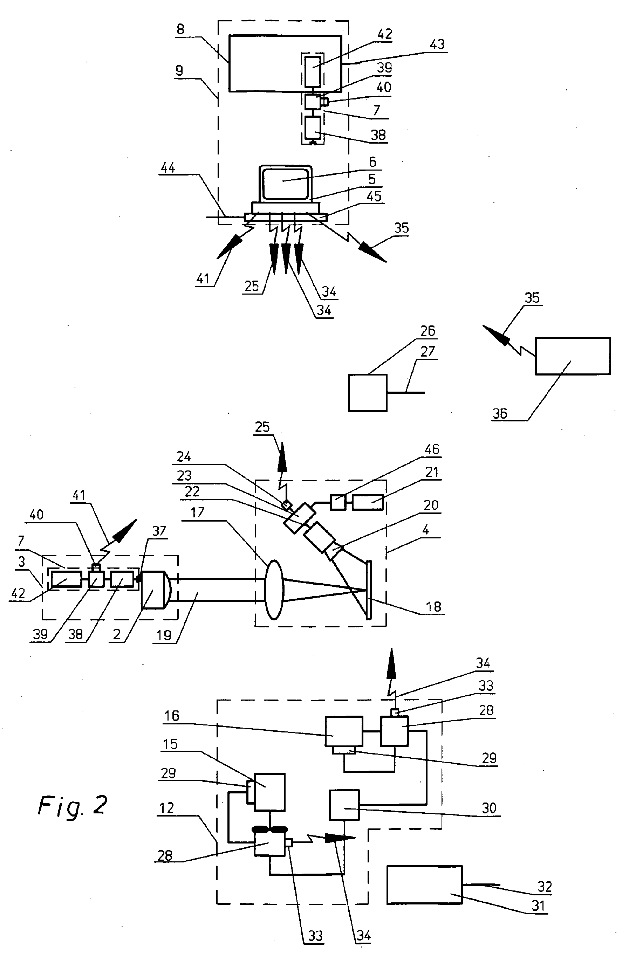

Das Blockdiagramm gemäß Fig. 2 skizziert das Zusammenwirken der verschiedenen Funktionselemente der Vorrichtung 1 gemäß Fig. 1. Dazu sind weitere Bestandteile der Vorrichtung 1 dargestellt. Neben einer Optik 17 und einem Schirm 18, auf den das von dem Scheinwerfer 2 kommende Licht 19 abgebildet wird, umfasst der Lichtsammelkasten 4 die Kamera 20, die die Kamera 20 mit elektrischer Energie versorgende Kondensatorbatterie 21, die das Videosignal 22 der Kamera 20 vorauswertende Bildverarbeitungseinheit 23 und das Bluetooth-Modul 24 zur Ausbildung der drahtlosen Datenübertragungsstrecke 25 zu dem Rechner 5. Für die Kondensatorbatterie 21 ist die ortsfeste Ladestation 26 vorgesehen, die über einen Stromanschluss 27 an ein Stromnetz angeschlossen ist. Die zum Positionieren des Lichtsammelkastens 4 verwandte Antriebseinrichtung 12 umfasst den Verfahrantrieb 15 für die horizontale Richtung und den Verfahrantrieb 16 für die vertikale Richtung. Jedem dieser Verfahrantriebe 15, 16 ist ein getakteter Regler 28 und ein Drehgeber 29 zugeordnet. Das Signal des Drehgebers 29 wird von dem jeweiligen Regler 28 zusammen mit dem Ansteuersignal des Rechners 5 für den Betrieb des jeweiligen Verfahrantriebs 15 bzw. 16 verwendet. Zur Energieversorgung der Antriebseinrichtung 12 ist die Kondensatorbatterie 30 vorgesehen, der die ortsfeste Ladestation 31 mit einem Stromanschluss 32 zugeordnet ist. Zum Übertragen der Ansteuerdaten an die Regler 28 sind diese mit den Bluetooth-Modulen 33 versehen, die die drahtlosen Datenübertragungsstrecken 34 zu dem Rechner 5 ausbilden. Der Rechner 5 steuert die Antriebseinrichtung 12 in Abhängigkeit von Kenndaten des Kraftfahrzeugs an, zu dem der jeweils einzustellende Scheinwerfer 2 gehört. Diese Kenndaten kann der Rechner 5 über eine weitere drahtlose Datenübertragungsstrecke 35 von einem Zentralrechner 36 beziehen. Die von dem Lichtsammelkasten 4 an den Rechner 5 über die Datenübertragungsstrecke 25 übertragenen Bilddaten wertet der Rechner 5 aus, um eines der Scheinwerfereinstellwerkzeuge 7 zum Betätigen der Einstellschrauben 37 des Scheinwerfers 2 anzusteuern. Das Scheinwerfereinstellwerkzeug 7 weist dazu für seinen Werkzeugantrieb 38 den getakteten Regler 39 auf, der mit dem Bluetooth-Modul 40 versehen ist, das die Datenübertragungsstrecke 41 zu dem Rechner 5 ausbilden. Die Energieversorgung jedes Scheinwerfereinstellwerkzeugs 7 basiert auf einer Kondensatorbatterie 42, die in der Ladestation 8 wieder aufgeladen wird. Die Ladestation 8 weist einen Stromanschluss 43 auf, der mit dem Stromanschluss 44 einer Ladestation 45 des als PDA ausgebildeten Rechners 5 zusammengefasst sein wird, weil die Ladestation 8 und die Ladestation 45 auf der Einheit 9 gemäß Fig. 1 zusammengefasst sind. Alle Stromanschlüsse 27, 32, 43 und 44 der Vorrichtung 1 sind stationär. Die Energieversorgung aller beweglichen Teile der Vorrichtung erfolgen durch Kondensatorbatterien 21, 30, 42. Um der Kamera 20 und auch der Bildverarbeitungseinheit 23 eine konstante Betriebsspannung zur Verfügung zu stellen, ist hier auch der Kondensatorbatterie 21 ein getakteter Regler 46 nachgeschaltet. Bei einer ausreichenden Toleranz der Kamera 20 und der Bildverarbeitungseinheit 23 gegenüber einer variierenden Eingangsspannung kann auf diesen getakteten Regler 46 verzichtet werden.

### BEZUGSZEICHENLISTE

- 1: Vorrichtung
- 2: Scheinwerfer
- 3: Fahrzeug
- 4: Lichtsammelkasten
- 5: Rechner
- 6: Display
- 7: Scheinwerfereinstellwerkzeug
- 8: Ladestation
- 9: Einheit
- 10: Portal
- 11: Durchfahrweg
- 12: Antriebseinrichtung
- 13: Horizontalführung
- 14: Vertikalführung
- 15: Horizontaler Verfahrantrieb
- 16: Vertikaler Verfahrantrieb
- 17: Lichtsammeloptik
- 18: Schirm
- 19: Licht
- 20: Kamera
- 21: Kondensatorbatterie
- 22: Videosignal
- 23: Bildverarbeitungseinheit
- 24: Bluetooth-Modul
- 25: Drahtlose Datenübertragungsstrecke
- 26: Ladestation
- 27: Stromanschluss
- 28: Getakteter Regler
- 29: Drehgeber
- 30: Kondensatorbatterie
- 31: Ladestation
- 32: Stromanschluss
- 33: Bluetooth-Modul
- 34: Drahtlose Datenübertragungsstrecke
- 35: Drahtlose Datenübertragungsstrecke
- 36: Zentralrechner
- 37: Einstellschraube
- 38: Werkzeugantrieb
- 39: Getakteter Regler
- 40: Bluetooth-Modul
- 41: Drahtlose Datenübertragungsstrecke
- 42: Kondensatorbatterie
- 43: Stromanschluss
- 44: Stromanschluss
- 45: Ladestation
- 46: getakteter Regler

## Patentansprüche

1. Vorrichtung zur Einstellung von Scheinwerfern von Kraftfahrzeugen,
mit einem Lichtsammelkasten, der eine in den Lichtsammelkasten einfallendes Licht erfassende Kamera umfasst,
mit einer Führung, entlang der der Lichtsammelkasten in definierter Winkelstellung vor einen Scheinwerfer eines Kraftfahrzeugs verfahrbar ist, und
mit einer elektrischen Energieversorgung für den Lichtsammelkasten,
**dadurch gekennzeichnet, dass** die Energieversorgung eine mit dem Lichtsammelkasten (4) verfahren werdende Kondensatorbatterie (21) und eine ortsfeste Ladestation (26) für die Kondensatorbatterie (21) aufweist, wobei der Lichtsammelkasten (4) entlang der Führung (13/14) in eine Ladeposition verfahrbar ist, in der die Kondensatorbatterie (21) mit der Ladestation (26) verbunden ist.

2. Vorrichtung nach Anspruch 1, **dadurch gekennzeichnet, dass** der Kondensatorbatterie (21) ein getakteter Regler (46) zugeordnet ist.

3. Vorrichtung nach Anspruch 1 oder 2, **dadurch gekennzeichnet, dass** die Ladeposition außerhalb eines Durchfahrwegs (11) für ein Kraftfahrzeug (3) durch die Vorrichtung (1) angeordnet ist.

4. Vorrichtung nach einem der Ansprüche 1 bis 3, **dadurch gekennzeichnet, dass** der Lichtsammelkasten (4) eine Bildverarbeitungseinheit (23) für ein Videosignal (22) der Kamera (20) umfasst.

5. Vorrichtung nach einem der Ansprüche 1 bis 4, **dadurch gekennzeichnet, dass** zwischen dem Lichtsammelkasten (4) und einer mobilen oder ortsfesten Einheit (9) der Vorrichtung (1) eine drahtlose Datenübertragungsstrecke (25) ausgebildet ist.

6. Vorrichtung nach Anspruch 5, **dadurch gekennzeichnet, dass** die mobile oder ortsfeste Einheit (9) einen Rechner (5) aufweist, der von dem Lichtsammelkasten (4) empfangene Bilddaten und dem Kraftfahrzeug (3) zugeordnete Kenndaten verarbeitet.

7. Vorrichtung nach einem der Ansprüche 1 bis 6, **dadurch gekennzeichnet, dass** ein mobiles Scheinwerfereinstellwerkzeug (7) mit einem elektrischen Werkzeugantrieb (38), mit einem drahtlos angesteuerten getakteten Regler (39) und mit einer Kondensatorbatterie (42) sowie eine Ladestation (8) für die Kondensatorbatterie (42) vorgesehen sind, wobei der getaktete Regler (39) die Energiezufuhr von der Kondensatorbatterie (42) zu dem Werkzeugantrieb (38) regelt.

8. Vorrichtung nach Anspruch 6 und Anspruch 7, **dadurch gekennzeichnet, dass** die Ladestation (8) für die Kondensatorbatterie (42) des Scheinwerfereinstellwerkzeugs (7) an der mobilen oder ortsfesten Einheit (9) mit dem Rechner (5) vorgesehen ist, wobei der Rechner (5) den Regler (39) des Scheinwerfereinstellwerkzeugs ansteuert.

9. Vorrichtung nach einem der Ansprüche 1 bis 7, **dadurch gekennzeichnet, dass** der Lichtsammelkasten (4) mit einer Antriebseinrichtung (12) verfahrbar ist, die mindestens einen seinerseits verfahrbaren elektrischen Verfahrantrieb (14, 16) und eine Energieversorgung für den Verfahrantrieb(14, 16) aufweist, wobei die Energieversorgung eine Kondensatorbatterie (30) und einen getakteten Regler (28), die mit dem Verfahrantrieb (14, 26) verfahren werden, sowie eine ortsfeste Ladestation (31) für die Kondensatorbatterie (30) aufweist, wobei die Kondensatorbatterie (30) mit der Ladestation (31) verbunden ist, wenn sich der Lichtsammelkasten (4) in seiner Ladeposition befindet.

10. Vorrichtung nach Anspruch 6 oder 8, **dadurch gekennzeichnet, dass** der dem Verfahrantrieb (14, 16) zugeordnete getaktete Regler (28) drahtlos von dem Rechner (5) angesteuert wird.
